(19) Europäisches Patentamt / European Patent Office / Office européen des brevets

(11) **EP 2 573 903 A2**

(12) **DEMANDE DE BREVET EUROPEEN**

(43) Date de publication:
   **27.03.2013 Bulletin 2013/13**

(51) Int Cl.:
   ***H02J 7/14*** (2006.01)       ***H02P 9/48*** (2006.01)

(21) Numéro de dépôt: **12183823.9**

(22) Date de dépôt: **11.09.2012**

(84) Etats contractants désignés:
   **AL AT BE BG CH CY CZ DE DK EE ES FI FR GB GR HR HU IE IS IT LI LT LU LV MC MK MT NL NO PL PT RO RS SE SI SK SM TR**
   Etats d'extension désignés:
   **BA ME**

(30) Priorité: **21.09.2011 FR 1158390**

(71) Demandeur: **VALEO EQUIPEMENTS ELECTRIQUES MOTEUR**
   **94046 Créteil (FR)**

(72) Inventeur: **Chassard, Pierre**
   **94000 CRETEIL (FR)**

(54)   **Procédé et système de régulation d'un alternateur de véhicule automobile, et alternateur de véhicule automobile comprenant un tel système**

(57)   Le procédé selon l'invention concerne la régulation d'un alternateur (3) de véhicule automobile destiné à être accouplé à un moteur thermique du véhicule et apte à produire une tension d'alimentation (Ubat) d'un réseau de bord (4) du véhicule. La tension d'alimentation est asservie à une valeur de consigne (Uref) au moyen d'une boucle de régulation (3, 7, 8, 10). La boucle de régulation comprend des moyens d'acquisition numériques (7) d'une valeur échantillonnée (Us) de la tension d'alimentation et contrôle un signal d'excitation (9) de type à largeur d'impulsion variable (DC_EXC) commandant un courant d'excitation (I_EXC) circulant dans un enroulement d'excitation de l'alternateur. Conformément à l'invention, on limite (13, Cth) des variations de la valeur échantillonnée entre un seuil inférieur et un seuil supérieur autour d'une valeur moyenne (14) de la valeur échantillonnée (11, 12).

FIG. 4

EP 2 573 903 A2

**Description**

**DOMAINE TECHNIQUE DE L'INVENTION.**

La présente invention concerne un procédé de régulation d'un alternateur destiné à être accouplé à un moteur thermique de véhicule automobile. L'invention concerne également un système apte à la mise en oeuvre de ce procédé, ainsi que l'alternateur comprenant ce système.

**ARRIERE PLAN TECHNOLOGIQUE DE L'INVENTION.**

Dans le domaine de l'automobile, il est bien connu de maintenir une tension fournie au réseau électrique de bord par un alternateur du véhicule à une valeur de consigne prédéterminée, indépendamment de la vitesse de rotation du moteur ou de la consommation électrique des équipements, au moyen d'un système de régulation dit « régulateur ».

Ce régulateur, généralement intégré à l'alternateur, contrôle un courant d'excitation fourni par une batterie et circulant dans un enroulement d'excitation de l'alternateur.

De nos jours, les équipementiers de l'automobile ont développé des alternateurs très performants en mettant en oeuvre des systèmes électroniques de puissance contrôlés par des circuits faisant appel à des techniques numériques.

La tension de sortie de l'alternateur est échantillonnée et les valeurs numériques obtenues sont comparées en permanence après traitement à une valeur de consigne par le régulateur qui contrôle l'intensité du courant d'excitation de manière à annuler toute différence.

Pour ce faire, le régulateur fait varier un rapport cyclique d'un signal d'excitation de type PWM (pour "Pulse Width Modulation" en terminologie anglaise), c'est-à-dire de type à largeur d'impulsion variable, commandant un commutateur de puissance du circuit d'excitation.

Des systèmes de régulation numériques de ce type sont connus de l'état de la technique, notamment celui décrit dans la demande de brevet français FR2952769 de la société VALEO EQUIPEMENT ELECTRIQUE MOTEUR.

Certains constructeurs d'automobiles, pour des raisons d'économie d'énergie, ont été amenés à abaisser la vitesse de ralenti des moteurs thermiques équipant leurs véhicules à des vitesses de rotation d'environ 800 tr/mn, voire 680 tr/mn.

Or, à ces vitesses de ralenti, la courbe courant débité/ vitesse de rotation d'un alternateur standard couplé au moteur thermique présente une forte pente.

Il en résulte l'apparition d'oscillations d'acyclisme autour de la vitesse de ralenti, qui se traduisent par des variations du débit de l'alternateur.

Ces variations de débit entraînent des variations de gain dans la boucle de régulation de l'alternateur:

les régulateurs connus de l'état de la technique corrigent alors l'excitation au rythme de l'acyclisme en faisant passer le courant d'excitation du minimum d'excitation au maximum d'excitation (plein champ).

Ceci est un inconvénient pour ceux des constructeurs d'automobiles qui utilisent directement l'image de l'excitation pour connaître la charge de l'alternateur, car l'excitation varie trop au ralenti.

**DESCRIPTION GENERALE DE L'INVENTION.**

La présente invention vise par conséquent à pallier cet inconvénient.

Elle a précisément pour objet un procédé de régulation d'un alternateur de véhicule automobile destiné à être accouplé à un moteur thermique du véhicule.

De manière connue, un alternateur de ce type est apte à produire une tension d'alimentation d'un réseau de bord du véhicule asservie à une valeur de consigne au moyen d'une boucle de régulation comprenant des moyens d'acquisition numériques d'une valeur échantillonnée de la tension d'alimentation et contrôlant un signal d'excitation de type à largeur d'impulsion variable commandant un courant d'excitation circulant dans un enroulement d'excitation de l'alternateur.

Le procédé selon l'invention est remarquable en ce qu'on limite des variations de cette valeur échantillonnée autour de sa valeur moyenne entre un seuil inférieur et un seuil supérieur.

Fort avantageusement, ces seuils inférieur et supérieur sont réglables.

De préférence, un écart entre les seuils inférieur et supérieur est sensiblement égal à 20% d'une dynamique de la valeur échantillonnée.

Selon le procédé de l'invention, on détermine préférentiellement la valeur moyenne de la valeur échantillonnée de la tension d'alimentation au moyen d'un filtre passe-bas numérique.

Alternativement, on détermine préférentiellement cette valeur moyenne au moyen d'une moyenne glissante.

On tire bénéfice du fait que, selon l'invention, les variations de la valeur échantillonnée ne sont limitées qu'aux faibles vitesses de rotation de l'alternateur correspondant au ralenti du moteur thermique.

L'invention concerne également un système de régulation d'un alternateur destiné à être accouplé à un moteur thermique de véhicule automobile et apte à la mise en oeuvre du procédé décrit ci-dessus.

Selon une architecture connue, ce système de régulation comprend une boucle de régulation asservissant une tension d'alimentation d'un réseau de bord du véhicule à une valeur de consigne en contrôlant un signal d'excitation de type à largeur d'impulsion variable commandant un courant d'excitation circulant dans un enroulement d'excitation de l'alternateur.

Selon une caractéristique également connue, cette boucle de régulation comprend un bloc d'acquisition numérique d'une valeur échantillonnée de la tension d'alimentation.

Toutefois le système de régulation selon l'invention est remarquable, dans un mode de réalisation général, en ce que le bloc d'acquisition numérique comprend un module écrêteur piloté par un module moyenneur.

Un mode particulier de réalisation du système de régulation selon l'invention concerne un système de régulation comprenant une boucle de régulation dont le bloc d'acquisition numérique d'une valeur échantillonnée de la tension d'alimentation, connu en soi, comprend un convertisseur analogique numérique et un filtre anti-repliement.

Dans cette architecture particulière, le système de régulation selon l'invention est remarquable en ce que le bloc d'acquisition numérique comprend en outre un module moyenneur connecté en dérivation à l'entrée du filtre anti-repliement et pilotant un module écrêteur connecté en sortie de ce filtre anti-repliement.

Dans l'un ou l'autre de ces modes de réalisation, le module moyenneur est avantageusement constitué d'un filtre numérique passe-bas de faible bande passante.

L'invention concerne aussi un alternateur de véhicule automobile comprenant un système de régulation présentant les caractéristiques spécifiées ci-dessus.

Ces quelques spécifications essentielles auront rendu évidents pour l'homme de métier les avantages apportés par le procédé de régulation d'un alternateur de véhicule automobile selon l'invention, ainsi que par le système de régulation et l'alternateur correspondant, par rapport à l'état de la technique antérieur.

Les spécifications détaillées de l'invention sont données dans la description qui suit en liaison avec les dessins ci-annexés. Il est à noter que ces dessins n'ont d'autre but que d'illustrer le texte de la description et ne constituent en aucune sorte une limitation de la portée de l'invention.

**BREVE DESCRIPTION DES DESSINS.**

La **Figure 1** montre la caractéristique courant débité/ vitesse de rotation d'un alternateur de véhicule automobile d'un type connu de l'état de la technique concerné par l'invention.

Les **Figures 2a et 2b** illustrent le principe de deux solutions d'élimination de l'acyclisme connues de l'état de la technique.

La **Figure 3** est un schéma synoptique d'un système de régulation d'un alternateur de véhicule automobile d'un type connu de l'état de la technique.

La **Figure 4** est un schéma synoptique général d'un système de régulation d'un alternateur de véhicule automobile selon l'invention.

La **Figure 5** montre un exemple de fonction de transfert d'un module écrêteur mis en oeuvre par l'invention.

La **Figure 6** montre la réponse en fréquence d'un exemple de filtre passe-bas numérique mis en oeuvre par l'invention.

La **Figure 7** est un schéma synoptique détaillé d'une partie d'une boucle de régulation numérique, montrant notamment un bloc d'acquisition numérique, d'un système de régulation connu de l'état de la technique.

La **Figure 8** est un schéma synoptique détaillé d'une partie d'une boucle de régulation numérique, montrant notamment un bloc d'acquisition numérique, d'un système de régulation selon l'invention.

**DESCRIPTION DES MODES DE REALISATION PREFERES DE L'INVENTION.**

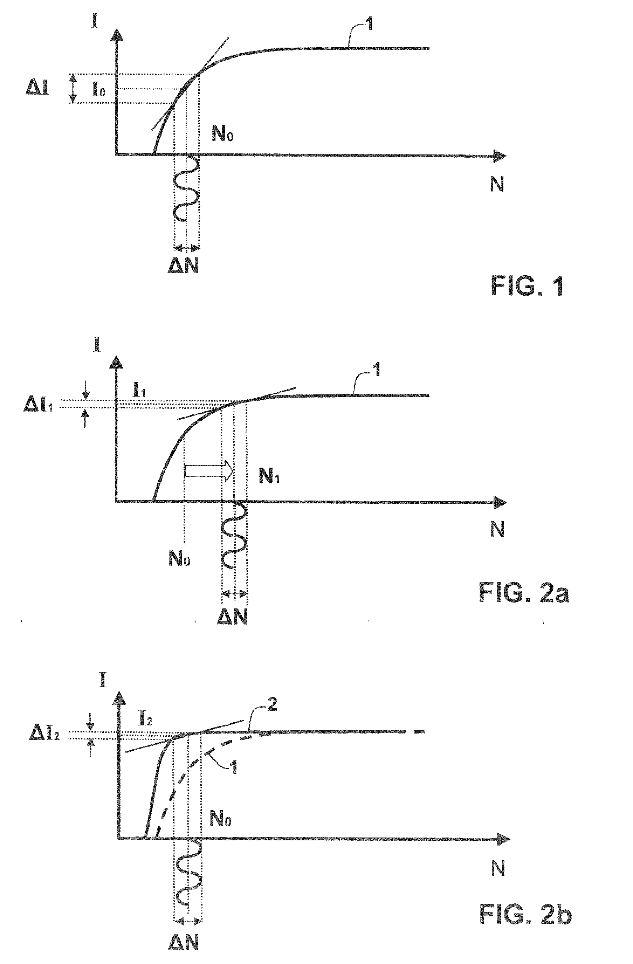

Ainsi que cela a déjà été rappelé en préambule, dans le cas où un alternateur standard est couplé à un moteur thermique fonctionnant au ralenti, une petite variation $\Delta N$ de la vitesse de rotation N de l'alternateur autour d'une vitesse nominale N0, par exemple d'environ 1800 tr/mn, provoque une variation $\Delta I$ importante de l'intensité débitée 10, comme le montre bien la **Figure 1,** à cause de la pente importante de la caractéristique intensité/ vitesse 1 à bas régime.

Il en résulte alors le phénomène d'acyclisme qui provoque de fortes variations d'excitation que certains constructeurs d'automobiles considèrent comme inacceptables.

Une première solution simple d'élimination de l'acyclisme est illustrée sur la **Figure 2a.** Cette première solution consiste à changer le point de fonctionnement du ralenti sur la courbe de débit 1 de l'alternateur vers une première vitesse de rotation N1, par exemple 2000 tr/mn, supérieure à la vitesse nominale N0 antérieure.

L'accroissement de vitesse de rotation au ralenti peut être obtenu simplement en changeant le diamètre de la poulie d'entraînement de l'alternateur.

La pente de la caractéristique de débit 1 de l'alternateur pour une vitesse N1 supérieure à N0 étant plus faible, la variation de l'intensité débitée $\Delta I1$ est plus faible que la variation de l'intensité débitée $\Delta I$ antérieure pour une même amplitude de l'acyclisme $\Delta N$.

Cette première solution peut affecter le dimensionnement de la poulie en fonctionnement en "survitesse", et n'a pas été retenue pour cette raison.

Une seconde solution permettant de pallier l'inconvénient de l'acyclisme au ralenti est illustrée sur la **Figure 2b.** Cette seconde solution consiste à modifier la courbe de débit 1 de l'alternateur au ralenti afin d'avoir un point de fonctionnement au ralenti qui se situe sur le plateau de débit 2 de l'alternateur.

Dans ces conditions, la pente du plateau de débit 2 de l'alternateur pour une vitesse nominale N0 au ralenti étant faible, la variation de l'intensité débitée $\Delta I2$ est faible pour cette même amplitude de l'acyclisme $\Delta N$.

Mais cette seconde solution entraîne une nouvelle conception de l'alternateur afin d'augmenter la plage de fonctionnement à débit constant; elle n'a pas été retenue non plus pour cette raison.

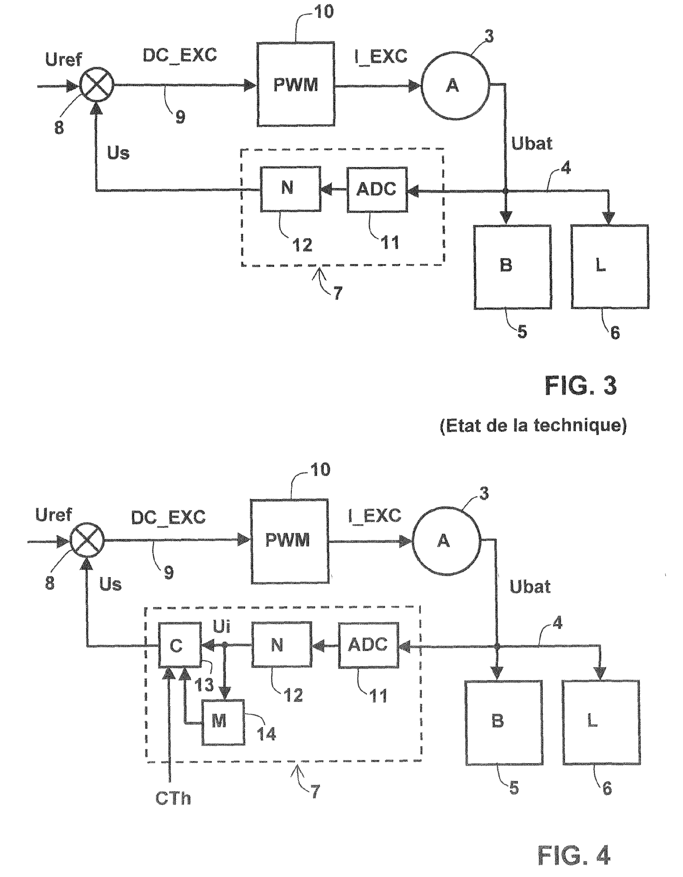

Une architecture générale, connue de l'état de la technique, d'une alimentation par un alternateur 3 d'un réseau de bord 4 d'un véhicule automobile, auquel sont connectées une batterie 5 et des charges électriques 6, est représentée sur la **Figure 3.**

De manière connue en soi, la tension d'alimentation Ubat tend à être maintenue constante, une valeur échantillonnée Us fournie par un bloc d'acquisition numérique 7 étant comparée en permanence à une valeur de consigne Uref par un comparateur numérique 8.

En fonction de l'écart entre la valeur échantillonnée Us et la valeur de consigne Uref, un signal d'excitation 9 de type à largeur d'impulsion variable DC_EXC commandant un courant d'excitation I_EXC circulant dans un enroulement d'excitation de l'alternateur 3 au moyen d'un commutateur de puissance 10 est contrôlé par la boucle de régulation 3, 7, 8, 10.

La tension analogique Ubat produite par l'alternateur 3 est classiquement échantillonnée par un convertisseur analogique-numérique 11 et les échantillons générés sont conditionnés par un module de conditionnement numérique 12 au sein du bloc d'acquisition numérique 7.

Utilisé à bas régime avec un alternateur 3 standard, un système de régulation de ce type, montré sur la **Figure 3,** ne permet pas de contrôler les fortes variations du courant d'excitation I_EXC dues à l'acyclisme.

Dans le but de pallier cet inconvénient, l'entité inventive a observé qu'il suffisait de limiter les variations de l'alimentation de retour Us sans avoir besoin ni de modifier le diamètre de la poulie d'entraînement de l'alternateur 3, ni de revoir complètement les caractéristiques électromécaniques de l'alternateur 3.

Pour ce faire, le bloc d'acquisition numérique 7 du système de régulation selon l'invention, représenté schématiquement sur la **Figure 4,** comprend, dans un mode de réalisation général, des modules additionnels 13, 14 qui effectuent un traitement supplémentaire sur les échantillons générés et conditionnés Ui, et limitent les variations de la valeur échantillonnée Us de la tension d'alimentation Ubat entre un seuil inférieur Th1 et un seuil supérieur Th2 autour d'une valeur moyenne Um de la valeur échantillonnée Us.

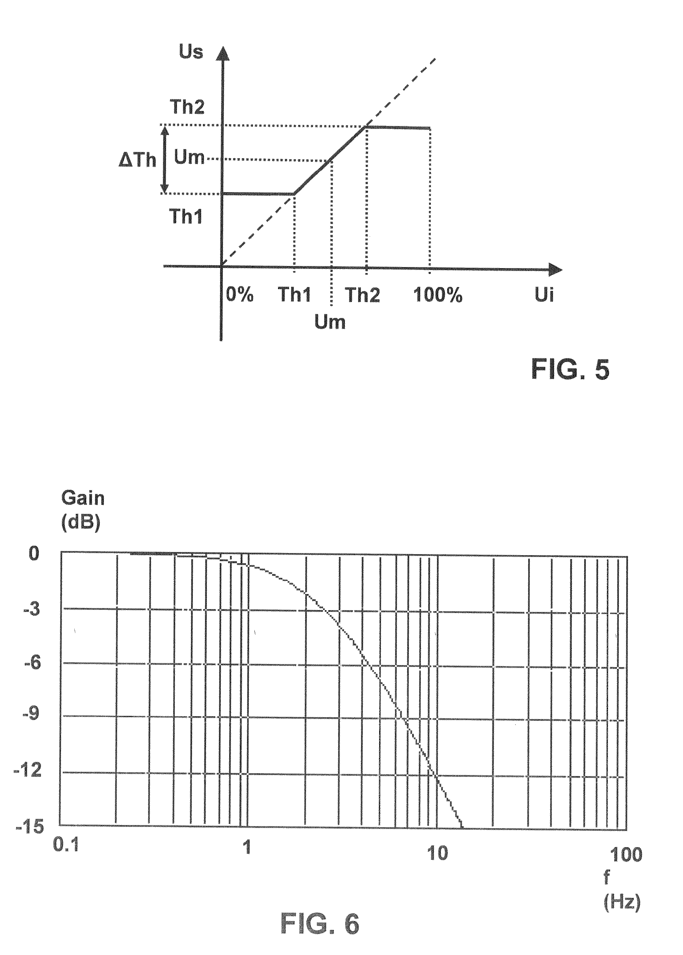

Cet écrêtage est réalisé par un module écrêteur 13 dont la fonction de transfert est représentée sur la **Figure 5.**

Un écart ΔTh entre le seuil supérieur Th1 et le seuil supérieur Th2 est sensiblement égal à 20% d'une dynamique des échantillons Ui.

Une entrée CTh du module écrêteur 13 permet de régler ces seuils Th1, Th2 de façon optimum pour une application donnée, en tenant compte du fait qu'un réglage avec un écrêtage trop fort conduirait à un signal d'excitation 9 avec très peu de dynamique qui aurait pour conséquence de rendre l'asservissement instable, tandis qu'un réglage avec un écrêtage trop faible conduirait à un signal d'excitation 9 avec une très grande dynamique et serait donc inefficace.

Une valeur moyenne Um de la valeur échantillonnée Us de la tension d'alimentation Ubat est déterminée par un bloc moyenneur 14 à partir des échantillons conditionnés Ui, soit par le calcul d'une moyenne glissante, de préférence dans une fenêtre temporelle comprise entre 100 ms et 200 ms, soit au moyen d'un filtre passe-bas numérique présentant une très faible bande passante, de préférence sensiblement égale à 2,5 Hz, comparable à la bande passante de l'enroulement d'excitation de l'alternateur 3.

Une fonction de transfert numérique (rapport entre la transformée en z de la sortie sur la transformée en z de l'entrée) est du type:

$$FT(u) = \frac{a}{1-(1-a)z(u)^{-1}}$$

La réponse en fréquence correspondante est, à titre d'exemple, représentée sur la **Figure 6.**

Le traitement supplémentaire des échantillons Ui de la tension d'alimentation Ubat n'est mis en oeuvre par les modules additionnels 13, 14 qu'au ralenti; les modules écrêteur et moyenneur étant déconnectés dès que la vitesse augmente (hors zone de ralenti).

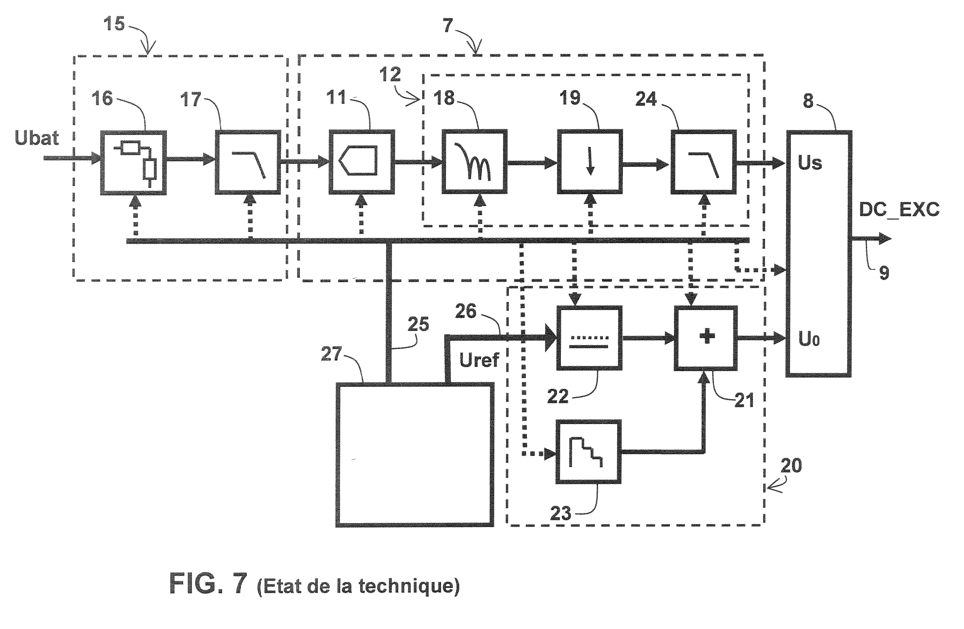

La **Figure 7** montre le schéma synoptique détaillé d'une partie de la boucle de régulation numérique d'un système de régulation divulgué antérieurement par l'entité inventive.

Le bloc d'acquisition numérique 7 de la tension d'alimentation Ubat utilise de préférence un ou plusieurs ASIC (acronyme de « Application Specific Integrated Circuit » en anglais, c'est-à-dire « Circuit intégré spécifique à une application ») dans lesquels sont câblés différents modules de traitement du signal, propriétaires et réutilisables, développés en VHDL (« IP VHDL cores », en anglais, où « IP VHDL » est l'acronyme de « Intellectual Properties Verilog Hardware Development Language»).

Une partie analogique 15 de la boucle de régulation adapte la dynamique et la bande passante de la tension de sortie Ubat de l'alternateur 3 aux caractéristiques d'entrée du convertisseur analogique-numérique 11 au moyen d'un diviseur de tension 16 et d'un filtre passe-bas analogique 17.

Ce CAN 11 est un circuit standard et peu onéreux ayant une faible résolution. L'utilisation d'un CAN de faible résolution est rendue possible, tout en conservant un nombre de bits utiles suffisants dans la boucle de régulation, en utilisant une technique de sur-échantillonnage associée à l'utilisation d'un filtre moyenneur 18 et de moyens de décimation 19 au niveau du module de conditionnement numérique 12.

Les échantillons Us issu des moyens de décimation 19 sont comparés à un signal de référence $U_0$ par le comparateur numérique 8.

De manière connue, le signal de référence $U_0$ est produit au moyen d'un générateur de dents de scie 20, par exemple par l'addition dans un circuit additionneur 21 d'une valeur de consigne Uref contenue dans un registre 22 fixant la tension de sortie Uref de l'alternateur 3 à maintenir, et d'un signal de comptage d'un décompteur ou d'un compteur-décompteur 23 réinitialisé périodiquement.

La comparaison du signal échantillonné Us au signal de référence $U_0$ produit un signal rectangulaire 9 de rapport cyclique variable DC_EXC qui commande l'intensité du courant d'excitation I_EXC de l'alternateur 3.

Le module de conditionnement numérique 12 comprend un filtre anti-repliement 24 placé en amont du comparateur numérique 8, limitant la bande passante à la moitié de la fréquence de fonctionnement de ce comparateur 8.

Tous ou certains des différents éléments 11, 16, 17, 18, 19, 21, 22, 23, 24 de la boucle de régulation, qu'ils soient analogiques ou numériques, sont programmables et interfacés avec un bus de configuration 25 et un bus de données 26 reliés à un bloc électronique 27 dédié à la configuration de ces éléments, comme le montre la **Figure 7.**

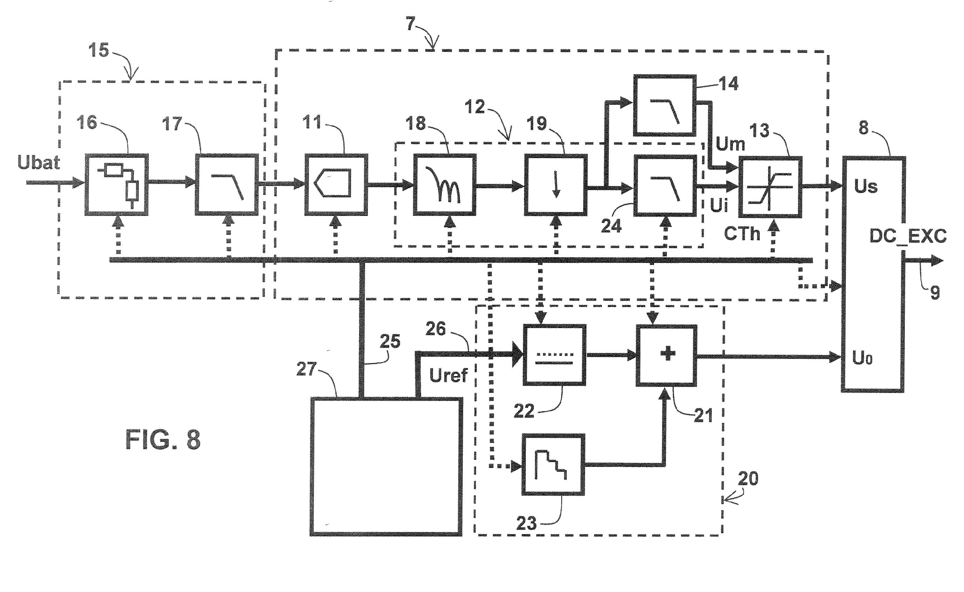

La **Figure 8** montre un mode de réalisation particulier du système de régulation d'un alternateur 3 de véhicule automobile selon l'invention qui consiste à ajouter le module écrêteur 13 et le module moyenneur 14 précédemment décrits au bloc d'acquisition numérique 7 du système de régulation antérieur (**Figure 7**).

Le module moyenneur 14 est connecté en dérivation à l'entrée du filtre anti-repliement 24. Il fournit au module écrêteur 13 placé en sortie Ui ce filtre anti-repliement 24 la valeur moyenne Um des échantillons issus des moyens de décimation 19.

La mise en service au ralenti du module écrêteur 13, ainsi que le réglage des seuils Th1, Th2 sont effectués à partir du bus de configuration 25.

Des essais avec une vitesse de rotation de l'alternateur 3 d'environ 1900 tr/mn (correspondant à un ralenti moteur), et des oscillations d'acyclisme à une fréquence d'environ 22 Hz, ont montré l'efficacité du dispositif. Quand le module écrêteur 13 est en service, les variations du courant d'excitation I_EXC ne sont que de 50% de l'écart entre le plein champ et le champ minimum.

Le procédé et le système de régulation selon l'invention ont ainsi permis de résoudre le problème de l'acyclisme au régime de ralenti sans modification mécanique, ou électro-mécanique, importante d'un alternateur 3 existant, pouvant conduire à des surcoûts de production considérables pour les constructeurs d'automobiles.

La modification ne porte en effet que sur le bloc de traitement numérique 7 de la boucle de régulation 3, 7, 8 10 et se limite à une modification de l'ASIC, aisément réalisable compte tenu de la modularité des traitements développés en VHDL.

Comme il va de soi, l'invention ne se limite pas aux seuls modes de réalisation préférentiels décrits ci-dessus.

Notamment, un module moyenneur 14 comportant un filtre passe-bas numérique présentant une fonction de transfert numérique autre que celle spécifiée ne constituerait qu'une variante de réalisation.

La fonction de transfert du module écrêteur 13 décrite n'est pas non plus limitative.

D'autres modes de réalisation ne sortiraient pas du cadre de la présente invention dans la mesure où ils résultent des revendications ci-après.

**Revendications**

1. Procédé de régulation d'un alternateur (3) de véhicule automobile destiné à être accouplé à un moteur thermique dudit véhicule et apte à produire une tension d'alimentation (Ubat) d'un réseau de bord (4) dudit véhicule asservie à une valeur de consigne (Uref) au moyen d'une boucle de régulation (3, 7, 8, 10) comprenant des moyens d'acquisition numériques (7) d'une valeur échantillonnée (Us) de ladite tension d'alimentation (Ubat) et contrôlant un signal d'excitation (9) de type à largeur d'impulsion variable (DC_EXC) commandant un courant d'excitation (I_EXC) circulant dans un enroulement d'excitation dudit alternateur (3), **caractérisé en ce qu'**on limite des variations de ladite valeur échantillonnée (Us) entre un seuil inférieur (Th1) et un seuil supérieur (Th2) autour d'une valeur moyenne (Um) de ladite valeur échantillonnée (Us).

2. Procédé de régulation d'un alternateur (3) de véhicule automobile selon la revendication 1, **caractérisé en ce que** lesdits seuils inférieur et supérieur (Th1, Th2) sont réglables.

3. Procédé de régulation d'un alternateur (3) de véhicule automobile selon la revendication 2, **caractérisé en ce qu'**un écart (ΔTh) entre lesdits seuils inférieur et supérieur (Th1, Th2) est sensiblement égal à 20% d'une dynamique de ladite valeur échantillonnée (Us).

4. Procédé de régulation d'un alternateur (3) de véhicule automobile selon l'une quelconque des revendication 1 à 4 précédentes, **caractérisé en ce qu'**on détermine ladite valeur moyenne (Um) au moyen d'un filtre passe-bas numérique.

5. Procédé de régulation d'un alternateur (3) de véhicule automobile selon l'une quelconque des revendication 1 à 4 précédentes, **caractérisé en ce qu'**on détermine ladite valeur moyenne (Um) au moyen d'une moyenne glissante.

6. Procédé de régulation d'un alternateur (3) de véhicule automobile selon l'une quelconque des revendication 1 à 5 précédentes, **caractérisé en ce que** lesdites variations de ladite valeur échantillonnée (Us) ne sont limitées qu'aux faibles vitesses de rotation (N0) dudit alternateur (3) correspondant au ralenti dudit moteur thermique.

7. Système de régulation d'un alternateur (3) de véhicule automobile apte à la mise en oeuvre du procédé selon l'un quelconque des revendications 1 à 6 précédentes, ledit alternateur (3) étant destiné à être accouplé à un moteur thermique dudit véhicule, comprenant une boucle de régulation (3, 7, 8, 10) asservissant une tension d'alimentation (Ubat) d'un réseau de bord (4) dudit véhicule à une valeur de consigne (Uref) en contrôlant un signal d'excitation (9) de type à largeur d'impulsion variable (DC_EXC) commandant un courant d'excitation (I_EXC) circulant dans un enroulement d'excitation dudit alternateur (3), ladite boucle de régulation (3, 7, 8, 10) comprenant un bloc d'acquisition numérique (7) d'une valeur échantillonnée (Us) de ladite tension d'alimentation (Ubat), **caractérisé en ce que** le bloc d'acquisition numérique (7) comprend un module écrêteur (13) piloté par un module moyenneur (14).

8. Système de régulation d'un alternateur (3) de véhicule automobile apte à la mise en oeuvre du procédé selon l'un quelconque des revendications 1 à 6 précédentes, ledit alternateur (3) étant destiné à être accouplé à un moteur thermique dudit véhicule, comprenant une boucle de régulation (3, 7, 8, 10) asservissant une tension d'alimentation (Ubat) d'un réseau de bord (4) dudit véhicule à une valeur de consigne (Uref) en contrôlant un signal d'excitation (9) de type à largeur d'impulsion variable (DC_EXC) commandant un courant d'excitation (I_EXC) circulant dans un enroulement d'excitation dudit alternateur (3), ladite boucle de régulation (3, 7, 8, 10) comprenant un bloc d'acquisition numérique (7) d'une valeur échantillonnée (Us) de ladite tension d'alimentation (Ubat), ledit bloc d'acquisition numérique (7) comprenant un convertisseur analogique numérique (11) et un filtre anti-repliement (24), **caractérisé en ce que** le bloc d'acquisition numérique (7) comprend en outre un module moyenneur (14) connecté en dérivation à l'entrée dudit filtre anti-repliement (24) et pilotant un module écrêteur (13) connecté en sortie (Ui) dudit filtre anti-repliement (24).

9. Système de régulation d'un alternateur (3) de véhicule automobile selon l'une quelconque des revendications 7 ou 8 précédentes, caractérisé en ce ledit module moyenneur (14) est constitué d'un filtre numérique passe-bas de faible bande passante, de préférence 2,5 Hz.

10. Alternateur (3) de véhicule automobile **caractérisé en ce qu'il** comprend un système de régulation selon l'une quelconque des revendications 7 à 9.

FIG. 1

FIG. 2a

FIG. 2b

Uref  DC_EXC  I_EXC  3

8  9  10  PWM  A

Us  Ubat  4

N  ADC

12  11

7

B  L

5  6

**FIG. 3**

**(Etat de la technique)**

Uref  DC_EXC  I_EXC  3

8  Us  9  10  PWM  A

Ubat

C  Ui  N  ADC  4

13  12  11

M

14

CTh  7

B  L

5  6

**FIG. 4**

FIG. 5

FIG. 6

FIG. 7 (Etat de la technique)

FIG. 8

**RÉFÉRENCES CITÉES DANS LA DESCRIPTION**

**Documents brevets cités dans la description**

- FR 2952769